# EUROPÄISCHE PATENTANMELDUNG

(11) **EP 1 950 489 A2**
(43) Veröffentlichungstag der Anmeldung: **30.07.2008**
(21) Anmeldenummer: 08100877.3
(22) Anmeldetag: 24.01.2008
(51) Int. Cl.: F17D 1/04

(54) **Schachteinrichtung, insbesondere für die Aufnahme von Gasarmaturen**

(30) Priorität: 24.01.2007 DE 102007004537
(71) Anmelder: gwa-armaturen GmbH, 38871 Ilsenburg (DE)
(72) Erfinder: Brand, Siegfried, 38110, Braunschweig (DE)
(74) Vertreter: Einsel, Martin

(57) **Zusammenfassung**

Eine Schachteinrichtung besitzt einen Schachtkörper, der von einem Bodenbereich bis zu einem Deckelbereich aufragt, einen Innenraum umgibt und zur Anordnung im Erdreich geeignet ist. Außerdem ist eine abnehmbare Abdeckung des Schachtkörpers vorgesehen. Zwei seitliche erste Anschlüsse für im Erdreich verlegte Versorgungsleitungen für Fluide, insbesondere Gase sind ebenfalls vorhanden. Eine Leitungsanordnung für Fluide, insbesondere Gase, besitzt eine Armatur und Leitungen, wobei die Armatur einen Zähler für das Fluid und/oder Absperreinrichtungen enthält. Die Leitungen verbinden die Armatur mit den beiden seitlichen ersten Anschlüssen für die Versorgungsleitungen und sind über zwei zweite Anschlüsse an die Armatur angeschlossen sind. Ein Überdruckventil ist vorgesehen, das bei einem Überdruck im Innenraum des Schachtkörpers (2) anspricht und den Innenraum nach außen öffnet.

## Beschreibung

Die Erfindung betrifft eine Schachteinrichtung insbesondere für die Aufnahme von Gasarmaturen. Es geht dabei speziell um eine Schachteinrichtung mit einem Schachtkörper, der von einem Bodenbereich bis zu einem Deckelbereich aufragt, einen Innenraum umgibt und zur Anordnung im Erdreich geeignet ist, mit einer abnehmbaren Abdeckung des Schachtkörpers, mit zwei seitlichen ersten Anschlüssen für im Erdreich verlegte Versorgungsleitungen für Fluide, insbesondere Gase, mit einer Leitungsanordnung für Fluide, insbesondere Gase, mit einer Armatur und Leitungen, wobei die Armatur einen Zähler für das Fluid und/oder Absperreinrichtungen enthält, wobei die Leitungen die Armatur mit den beiden seitlichen ersten Anschlüssen für die Versorgungsleitungen verbinden und über zwei zweite Anschlüsse an die Armatur angeschlossen sind.

Leitungen für Fluide, insbesondere Gasleitungen, müssen vielfach auch in Außenbereichen verlegt werden. Diese Leitungen weisen Abschnitte beispielsweise mit Gaszählern oder Gasreglern auf, die in regelmäßigen Abständen abgelesen werden müssen; auch ein Ausbau der Armaturen mit diesen Gaszählereinrichtungen und ein anschließender Einbau eines geeichten Ersatzgerätes müssen möglich sein. Da sich die Leitungen meist deutlich unterhalb der Erdoberfläche befinden, sind die Armaturen, Zähleranordnungen etc. in Schächten angeordnet, die sich von der Erdoberfläche bis einschließlich zu diesen Anlagen erstrecken. Die Fluidzuführungen beziehungsweise Gasleitungen führen dann aus dem umgebenden Erdreich in den Bodenbereich der Schachtanlagen, dort zu den entsprechenden Gaszählern oder sonstigen Armaturen und nach Durchlaufen derselben auf der anderen Seite des Bodenbereichs der Schachtanordnung wieder in das Erdreich zurück.

Die verwendeten Schachteinrichtungen müssen eine Reihe von Aufgaben erfüllen. Abgesehen davon, dass sie die im Inneren befindliche Armatur für die erforderlichen Prüfungen zugänglich halten müssen und gleichzeitig sicherstellen müssen, dass das durchzuleitende Medium, also das Gas, auch tatsächlich durchgeleitet wird, so müssen die Armaturen außerdem vor äußeren Einflüssen geschützt werden. Dabei ist zu berücksichtigen, dass sich die Schachteinrichtung außerhalb eines Gebäudes im Erdreich befindet. Äußere Einflüsse sind beispielsweise Schmutz, Staub oder auch Regen und Oberflächenwasser, die in den Schacht eindringen könnten. Sie würden die Armatur nicht nur verschmutzen und damit deren Ablesbarkeit gefährden, sondern auch über Anschlüsse und dergleichen die Leitung als solche beeinträchtigen.

Aus diesem Grund werden üblicherweise Schachteinrichtungen mit einer abnehmbaren Abdeckung ausgestattet, und zwar in Form einer Art Deckel oder Deckelelement, die die Schachteinrichtung nach oben dicht verschließt. Die Abdeckung muss abnehmbar sein, um die Armatur zugänglich zu halten. Die dichte Verschließmöglichkeit schützt die Armatur dann gegen in den Schacht eindringenden Schmutz, Staub, Regen und Oberflächenwasser. Eine derartige Schachteinrichtung ist für insbesondere Wasserleitungen beispielsweise aus der EP 1 584 757 A2 bekannt. Ein derartiger Schacht für die Unterbringung von Wasserzählern hat sich sehr bewährt.

Wenn die betroffenen Leitungen nicht Fluide in Form von Wasser, Abwasser und ähnlichen Flüssigkeiten, sondern Gase führen, treten andere und teilweise zusätzliche Probleme auf. Es wäre wünschenswert, wenn es Schachteinrichtungen gäbe, die auch die bei gasführenden Leitungen auftretenden Probleme berücksichtigen könnten.

Aufgabe der Erfindung ist es daher, eine Schachteinrichtung vorzuschlagen, die unverändert gegenüber dem Stand der Technik der Aufgabe nachkommt, eine im Inneren der Schachteinrichtung befindliche Armatur gegen äußere Einflüsse wie Schmutz oder Regen zu schützen, und die gleichwohl auch eine bessere Berücksichtigung der bei gasführenden Leitungen auftretenden Probleme ermöglicht.

Diese Aufgabe wird erfindungsgemäß bei einer gattungsgemäßen Schachteinrichtung dadurch gelöst, dass ein Überdruckventil vorgesehen ist, das bei einem Überdruck im Innenraum des Schachtkörpers anspricht und den Innenraum nach außen öffnet.

Mit einer derartigen Konzeption wird die Aufgabe gelöst.

Zu berücksichtigen ist nämlich, dass durch den festen und dichten Verschluss des Schachtkörpers dieser zu einem Druckbehälter wird, wenn tatsächlich eine Undichtigkeit der Leitungen und/oder der Armaturen im Inneren des Schachtkörpers auftreten sollte. Eine derartige Gefahr entsteht schon bei geringsten Undichtigkeiten, da diese sich im Laufe der Zeit des Betriebes der gasführenden Leitung in dem Innenraum in dem wie erwähnt dicht verschlossenen Schachtkörper ansammeln würden. Wenn es sich dabei um entzündliches, explosives, giftiges oder sonst bedenkliches Gas handelt, entsteht so ein erhebliches Gefährdungspotential für die Umgebung und für Personen, die beispielsweise den Schacht zu Wartungsarbeiten öffnen wollen oder sich bei einem Öffnungsvorgang in der Nähe befinden. Bedenkt man, dass sehr große Volumina im Laufe der Zeit aus einer undichten Leitung austreten können, bis ein solcher stetiger Verlust bemerkt wird, so wird die Gefahr besonders deutlich. Die Drücke, die in dem zu einem Druckbehälter gewordenen verschlossenen Schachtkörper auftreten können, sind erheblich und können im ungünstigen Fall auch zu einem spontanen Sprengen des Schachtkörpers führen.

Mit der Erfindung wird diese Aufgabe gelöst, ohne dass die sonst gegebenen Vorteile und Funktionsfähigkeiten aus dem Stand der Technik vernachlässigt werden. Das unverändert dicht verschließbare Element der abnehmbaren Abdeckung erlaubt eine Zugänglichkeit der Armatur und gleichzeitig einen Schutz der Armatur gegenüber äußeren Einflüssen wie Schmutz und Regen. Durch das Überdruckventil wird sichergestellt, dass sich im Innenraum des Schachtkörpers befindlicher Überdruck nach außen ausgleichen kann. Es kann also keine unerwünschte Ansammlung von aus Undichtigkeiten der Leitungen und/oder der Armaturen austretenden Gasmengen entstehen, da diese sofort zu Überdruck führen, der durch das Überdruckventil in den außerhalb des Schachtkörpers gelegenen Außenraum ausströmt.

Besonders bevorzugt ist es, wenn das Überdruckventil in der abnehmbaren Abdeckung des Schachtkörpers vorgesehen ist.

Mit einer derartigen Konzeption kann das Überdruckventil in die abnehmbare Abdeckung verlegt werden. Da diese abnehmbar und damit einfacher zugänglich ist, können hier auch Maßnahmen vorgesehen werden, die einen Austausch oder eine Wartung des Ventils betreffen, nachdem dieses angesprochen hat, oder die auch überhaupt ein Ansprechen dieses Ventils anzeigen, um der Ursache, also etwa der Undichtigkeit der Leitung, nachzugehen.

Sinnvoll ist es, wenn das Überdruckventil bereits bei Drücken von weniger als 100 hPa (100 mbar) öffnet. Wenn das Überdruckventil bereits bei geringen Drücken öffnet, kann vermieden werden, dass eine zu hohe Krafteinwirkung auf den Schachtkörper und die abnehmbare Abdeckung auftritt. Es ist hier zu berücksichtigen, dass hier eine große Querschnittfläche des Deckels beziehungsweise der abnehmbaren Abdeckung vorliegt. Öffnet das Überdruckventil jedoch bereits bei geringen Drücken von weniger als 100 hPa oder 100 mbar, so können höhere Überdrücke von vornherein vermieden werden.

Von besonderem Vorteil ist es außerdem wenn, das Überdruckventil im Falle einer Öffnung von einem großen Volumenstrom aus dem Innenraum des Schachtkörpers passiert werden kann.

Wenn bei geöffnetem Ventil große Volumenströme beziehungsweise große Gasvolumina passieren können, so kann auch bei einer größeren Leckage sich kein übermäßiger Druck aufbauen.

Zu solchen Leckagen kann es kommen, wenn etwa im Zuge von Bauarbeiten in der Nachbarschaft der Gasleitung es zu einem Abriss einer Armatur oder Gasleitung kommt. Dann müssen die in der Leitung vor dem Schacht montierten Sicherungsarmaturen wie beispielsweise Gasströmungswächter auch ansprechen, also schließen können, um ein weiteres Strömen zu verhindern.

Ein vor dem Schacht eingesetzter Gasströmungswächter schützt somit auch die im Schacht befindlichen Leitungen und Armaturen.

Weiter bevorzugt ist es, wenn das Überdruckventil gegen ein Eindringen von Schmutz und/oder Wasser aus dem Außenraum geschützt ist.

Sinnvoll ist es außerdem, wenn das Ventil nach Möglichkeit wartungsarm oder wartungsfrei gestaltet werden kann, um ein Tätigwerden auch dann zu gewährleisten, wenn dies nur selten in Anspruch genommen wird.

Bei Tests bewährt hat sich ein Ventil, das nach dem Schwerkraftprinzip ohne mechanische Bauteile arbeitet. Der gewünschte Öffnungsdruck des Überdruckventils wird dabei konstruktiv durch eine Kugelmasse und deren Querschnitt festgelegt, wenn ein Kugelventil eingesetzt wird.

Auch der anzustrebende Volumenstrom durch das Überdruckventil im Falle des Ansprechens kann an die verwendeten Armaturen und die Leitungsquerschnitte angepasst werden.

Gegen ein Eindringen von Schmutz, Staub, Regen, anderes Wasser oder sonstige Partikel hat sich eine U-Form der Überdruckventile bewährt. Ein Schmutz kann von oben hier nicht eindringen. Aufsteigendes Wasser kann ebenfalls nicht eindringen, da die in dem Überdruckventil verbleibende Luftsäule erheblich komprimiert werden müsste. Dabei ist zu berücksichtigen, dass 1 bar entsprechend 10 m Wassersäule oder 1.000 hPa etwa zur Halbierung des Volumens führen. Mit einer solchen Konzeption wird das Ventil also dauerhaft vor ungünstigen Einflüssen geschützt.

Ein weiterer nachteiliger Effekt, der bei Schachteinrichtungen auftritt, wird dadurch herbeigeführt, dass bei jedem Öffnen und Schließen der Innenraum des Schachtkörpers im Grunde regelmäßig mit atmosphärischer Luft gefüllt wird. Dies atmosphärische Luft ist mit Wasserdampf gesättigt, wobei der tatsächliche Wassergehalt in der atmosphärischen Luft von der Temperatur und anderen Faktoren abhängig ist, die jedoch von dem Benutzer, der den Schacht öffnet oder schließt, nicht beeinflusst oder ausgewählt werden können.

Ändert sich nun nach dem Schließen der Schachteinrichtung die Temperatur, kühlt sie sich insbesondere ab, so kondensiert das in dem Innenraum des Schachtkörpers jetzt in der ursprünglich atmosphärischen Luft enthaltene Wasser an kühlen Flächen dort ab, wo der Taupunkt erreicht oder unterschritten wird. Temperaturänderungen innerhalb des Erdbodens verlaufen immer vertikal durch die Wärme- beziehungsweise Frosteinwirkung. Bei einer vertikal verbauten Schachteinrichtung kondensiert mithin der Wasserdampf bei Frosteinwirkung an der höchsten Stelle, also an der Abdeckung. Das von dort auf Grund der Schwerkraft abtropfende Kondenswasser kann nun auf die gegenüber Korrosion meist schlecht geschützten Armaturen tropfen und diese beeinträchtigen.

Bei einer erfindungsgemäßen Konzeption sind hier verschiedene bevorzugte Möglichkeiten gegeben, um diesem unerwünschten Effekt entgegenzuwirken.

In einer Alternative wird das Einlegen von Trockenmitteln in den Schacht ermöglicht, in einer weiteren Alternative das Einbringen von trockenem Gas beziehungsweise trockener Luft, und in einer dritten Alternative das Absaugen des (feuchten) Gases aus dem Schacht.

Diese drei alternativen Lösungsansätze sind zweckdienlich, erfordern jedoch etwas mehr Aufwand und höhere Kosten sowie ein Fachwissen des Benutzers.

Eine besonders bevorzugte Alternative ist es daher, wenn die abnehmbare Abdeckung als Hohlkörper ausgebildet ist, und die abnehmbare Abdeckung zum Innenraum im Schachtkörper hin mit Öffnungen versehen ist, und in dem Hohlkörper der abnehmbaren Abdeckung eine Auffangmöglichkeit im Deckelboden vorgesehen ist.

Bei einer besonders bevorzugten Lösungsvariante ist dabei die abnehmbare Abdeckung als Hohlkörper ausgebildet und seitlich zum Innenraum des Schachtkörpers hin mit Öffnungen versehen. Die im Innenraum des Schachtkörpers aufsteigende wärmere Luft kann dann durch diese Öffnungen in den Hohlraum im Inneren der Abdeckung eindringen. Der Wasserdampf kann dann an der Deckelinnenwandung oben kondensieren, wo die Deckelinnenwandung etwas kühler ist. Das von dort abtropfende Wasser kann dann in dafür vorbereitete Einrichtungen, insbesondere Ausnehmungen, im Boden des Hohlraumes der abnehmbaren Abdeckung aufgefangen werden. Da die Deckelaußenfläche als höchster Punkt bei Abkühlung etwa unter Frosteinwirkung als erstes Bauteil gekühlt wird, ist sichergestellt, dass der Wasserdampf stets an dieser Stelle kondensiert.

Zur Unterstützung dieses Effektes wird erfindungsgemäß außerdem vorgeschlagen, die Deckelwandung in diesem Bereich mit einer höheren Wärmeleitfähigkeit als bei den weiteren Bauteilen der abnehmbaren Abdeckung und des übrigen Schachtkörpers auszubilden. Das führt dazu, dass dieser Flächenbereich eher auf das Taupunktniveau abkühlt als die anderen Partien des Schachtkörpers und der abnehmbaren Abdeckung.

Diesen Effekt kann man bevorzugt durch eine verminderte Wandstärke erreichen. Alternativ ist auch ein Einbringen von wärmeleitfähigeren Werkstoffen in diesen Bereich möglich.

Nach dem Abnehmen der abnehmbaren Abdeckung vom Schachtkörper kann das in den Ausnehmungen im Deckelboden aufgefangene Kondensat ausgegossen werden.

Um die Armatur besonders zweckmäßig im Inneren des Schachtkörpers an die Erdoberfläche bewegen zu können und damit die Ablesbarkeit deutlich zu erleichtern, ist es bevorzugt, wenn die Leitungen aus miteinander verbundenen steifen Leitungsabschnitten bestehen, und die steifen Leitungsabschnitte über mehrere verdrehbare Kupplungen miteinander gekoppelt sind.

Eine solche Konzeption ist an sich aus der EP 1 584 757 A2 bekannt, jedoch insbesondere im Zusammenhang mit Schachteinrichtungen für Wasserarmaturen.

Eine alternative Möglichkeit zur Bewegung der Armaturen im Innenraum einer Schachteinrichtung wird dadurch gegeben, dass die Leitungsanordnung Leitungen aufweist, die teleskopierbar ineinander gesteckt und zueinander abgedichtet sind.

Bei dieser Variante werden die Armaturen ebenso vertikal mit den Rohrleitungen bewegt, jedoch nicht scherenförmig. Ineinander gesteckte und zueinander abgedichtete Rohre sind medienführend ausgestaltet und parallel zu ihrer eigenen Längsachse verschiebbar. Es entsteht eine teleskopierbare Möglichkeit, die für Medien mit vergleichsweise geringen Drücken wie etwas Gas mit maximal 400 kPa (4 bar) eingesetzt werden können. Der anstehende Druck erzeugt im Zusammenspiel mit der Querschnittsfläche der Rohre eine Längskraft, die die Leitung auseinanderdrückt, also die Armaturen nach oben schiebt.

Die Kraft beim Absenken kann gegebenenfalls mit Unterstützung überwunden werden, wobei dann eine Arretierung in abgesenkter Stellung geschaffen werden sollte.

Mit dieser Konstruktion speziell für die erfindungsgemäßen Anwendungsfälle können mehrere Funktionen erfüllt werden, insbesondere eine vertikale translatorische Beweglichkeit, ein kraftunterstütztes Anheben und Absenken der Armaturen (durch Gewichte) und eine Bauweise mit sehr wenigen Bauteilen.

Im Folgenden werden anhand der Zeichnungen Ausführungsbeispiele der Erfindung näher beschrieben. Es zeigen:
- **Figur 1**: eine Seitenansicht einer ersten Ausführungsform der Erfindung;
- **Figur 2**: eine Seitenansicht der Ausführungsform der Erfindung aus Figur 1, um 90° gedreht;
- **Figur 3**: eine Draufsicht auf die Ausführungsform aus den Figuren 1 und 2;
- **Figur 4**: einen Schnitt durch die Ansicht aus Figur 1;
- **Figur 5**: einen Schnitt durch die Ansicht aus Figur 2;
- **Figur 6**: einen anderen Schnitt durch die Ansicht aus Figur 1;
- **Figur 7**: eine Draufsicht ähnlich Figur 3;
- **Figur 8**: eine vergrößerte Darstellung der Einzelheit A aus Figur 6;
- **Figur 9**: eine Ansicht einer weiteren Einzelheit einer Ausführungsform der Erfindung ;
- **Figur 10**: einen Schnitt durch Figur 9;
- **Figur 11**: eine Seitenansicht von Figur 9;
- **Figur 12**: eine Draufsicht auf die Einzelheit aus Figur 9;
- **Figur 13**: eine Draufsicht auf eine andere Ausführungsform;
- **Figur 14**: einen Schnitt durch Figur 13;
- **Figur 15**: eine Draufsicht auf Figur 13;
- **Figur 16**: eine vergrößerte Darstellung der Einzelheit A aus Figur 14;
- **Figur 17**: eine Seitenansicht eines Überdruckventils;
- **Figur 18**: einen Schnitt durch Figur 17;
- **Figur 19**: eine Darstellung ähnlich Figur 17 in anderer Position;
- **Figur 20**: eine Darstellung ähnlich Figur 18 in anderer Position;
- **Figur 21**: eine Darstellung einer weiteren Ausführungsform der Erfindung im Schnitt in zwei unterschiedlichen Positionen.

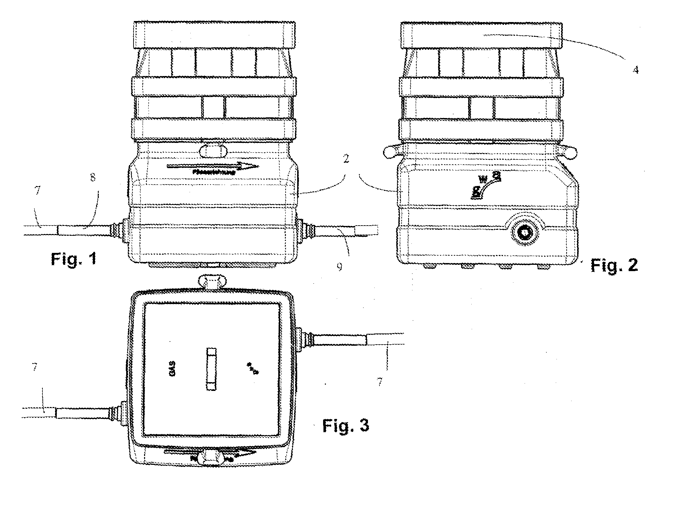

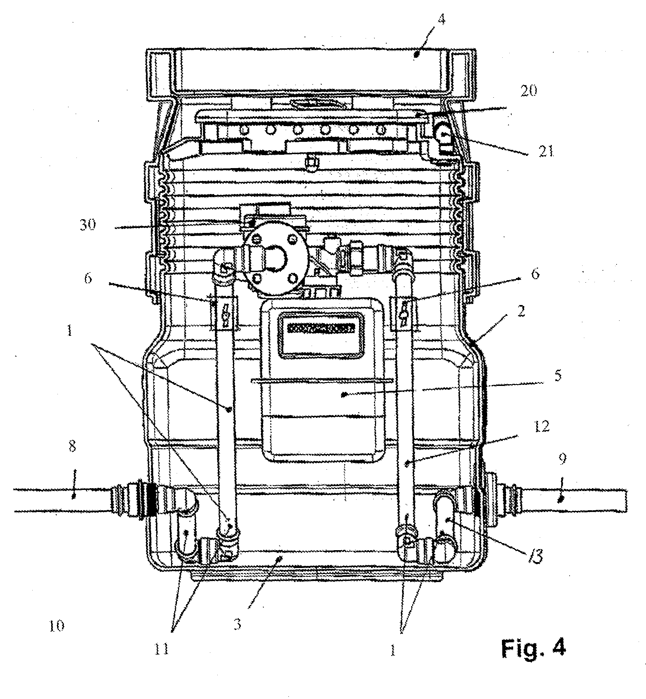

In **Figur 1** ist eine Schachteinrichtung mit einer Leitungsanordnung 1 für Fluide, insbesondere für Gase dargestellt. Zu erkennen ist ein Schachtkörper 2 mit einem Bodenbereich 3 und einem Deckelbereich 4. Die Schachtkörper 2 sind üblicherweise im Erdreich versenkt angeordnet, um dort Zähler 5 für Fluide, beispielsweise Gaszähler, und Absperreinrichtungen 6 oder dergleichen (vergleiche Figur 4) mit den im Erdreich angeordneten Versorgungsleitungen 7 verbinden zu können.

Im Bodenbereich des Schachtkörpers 2 sind daher zwei erste Anschlüsse 8, 9 für die im Erdreich verlegten Versorgungsleitungen 7 angeordnet.

In der **Figur 2** blickt man auf den Schachtkörper 2 um 90° versetzt, also parallel zu der Versorgungsleitung 7.

In der **Figur 3** schaut man von oben auf den Deckelbereich 4, der hier insbesondere von einer abnehmbaren Abdeckung 20 gebildet ist. Man sieht auch hier die beiden Versorgungsleitungen 7, die aus dem Schachtkörper 2 herausragen.

In der **Figur 4** erkennt man den Schachtkörper 2 im Schnitt, aus dem wiederum die Versorgungsleitungen 7 links und rechts herausragen. Diese sind mit zwei ersten Anschlüssen 8, 9 mit Leitungen 10, 11 im Inneren verbunden. Die Leitungen 10 ,11 führen zu dem Zähler 5 für ein Fluid, also etwa den Gaszähler, und/oder einer Absperreinrichtung 6. Der Zähler 5 und/oder die Absperreinrichtung 6 und gegebenenfalls weitere Armaturelemente sind mit den Leitungen 10, 11 zwischen dem Bodenbereich 3 und den Deckelbereich 4 des Schachtkörpers 2 in dessen Innenraum auf und ab bewegbar.

Das in den Versorgungsleitungen 7 sowie den Leitungen 10 und 11 befindliche Medium ist insbesondere ein Gas, das durch die Armaturen strömt und im Zähler 5 abgelesen werden kann.

Um den Zähler 5 ablesen zu können, muss er gegebenenfalls zur Erdoberfläche angehoben werden können. Dazu ist das abnehmbare Deckelelement 20 abnehmbar zu gestalten. Angedeutet ist auch bereits ein Überdruckventil 21 am Deckelelement 20 unterhalb des Deckelbereichs 4 des Schachtkörpers 2.

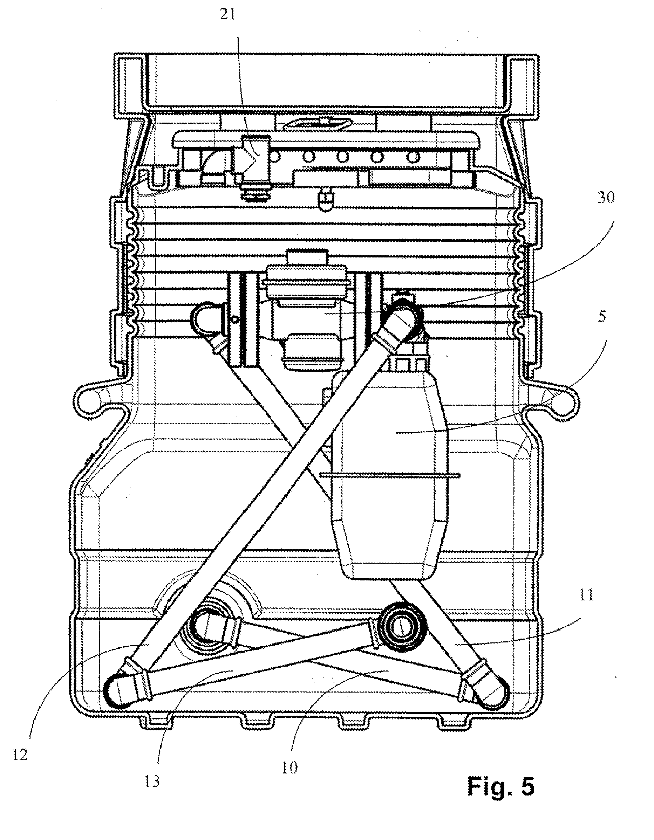

In der **Figur 5** kann man noch erkennen, dass zwecks Anhebung der Leitungen 10, 11 diese aus mehreren miteinander gefalteten und scherenförmig angeordneten steifen Leitungsabschnitte 14 bis 19 so gestaltet sind, dass alle Elemente vertikal auf und ab befördert werden können. Die Figur entspricht im Wesentlichen der Figur 4, allerdings um 90° gedreht. Deshalb ist zum Beispiel das Überdruckventil 21 hier in dem Bereich zu erkennen, in dem es auf der dem Betrachter zugewandten Seite liegt.

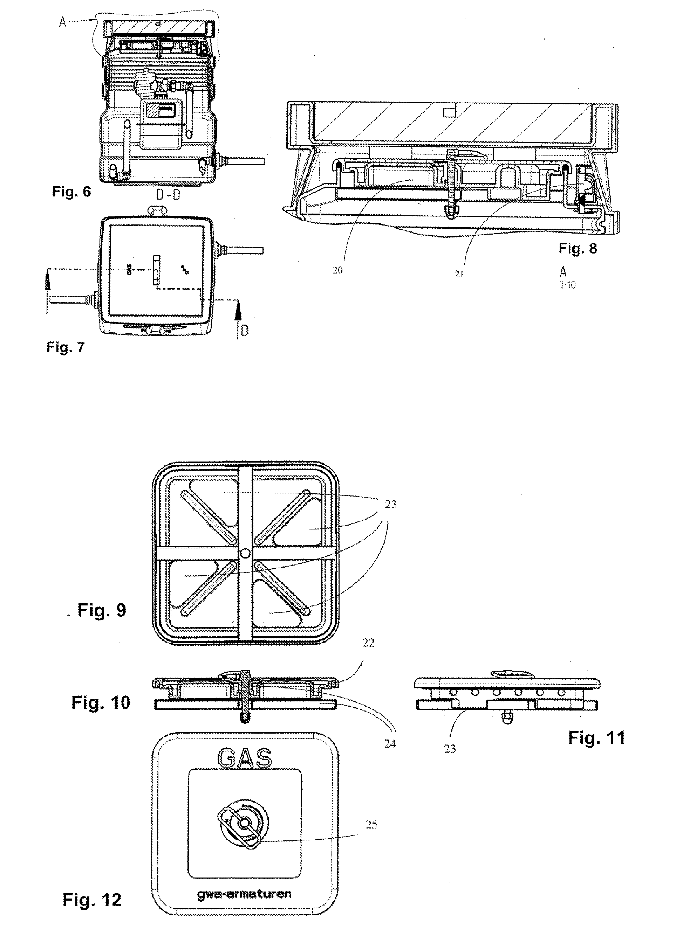

Die **Figur 6** zeigt den Deckelbereich 4 bezeichnet mit dem Buchstaben A. Die Figur 6 entspricht dabei im kleineren Maßstab einer ähnlichen Sicht wie in der Figur 4, allerdings anders geschnitten.

Die Figur 6 ist dabei ein Schnitt längs einer Linie D-D, die in der **Figur 7** angedeutet ist. Bei der Figur 7 handelt es sich um eine Draufsicht von oben auf den Deckelbereich 4 des Schachtkörpers 2.

In der **Figur 8** ist die Einzelheit A aus der Figur 6 besser dargestellt. Oben sieht man wiederum den Deckelbereich 4 mit seinem umlaufenden Rand. Darunter befindet sich das abnehmbare Deckelelement 20, das den Schachtkörper 2 ebenfalls verschließt. Der Deckelbereich 4 darüber schützt in erster Linie gegenüber den Umwelteinflüssen von außen. Er ist jedoch nicht zwingend hermetisch dicht. Man sieht hier insbesondere ein Überdruckventil 21 in dem abnehmbaren Deckelelement 20, mit dem innerhalb des Innenraumes im Schachtkörper 2 befindlicher Überdruck an die Umwelt abgegeben werden kann.

In den **Figuren 9 bis 12** ist eine weitere Einzelheit dargestellt. Dabei zeigt die Figur 9 das abnehmbare Deckelelement 20 schematisch als Draufsicht. Zu erkennen sind mehrere Elemente 23 eines Auffangs für Feuchtigkeit.

In der **Figur 10** ist das Deckelelement 20 im Schnitt dargestellt. Man kann dabei die Verriegelungsmechanik 24 erkennen, ferner eine außen umlaufende Dichtung.

In der **Figur 11** ist eine andere Ansicht ähnlich der Figur 10 zu erkennen, in der man den Auffang 23 nochmals gut erkennen kann.

**Figur 12** bietet eine Draufsicht, in der ein Griff 25 gut zu erkennen ist, der mit der Verriegelungsmechanik 24 aus Figur 10 zusammenwirkt.

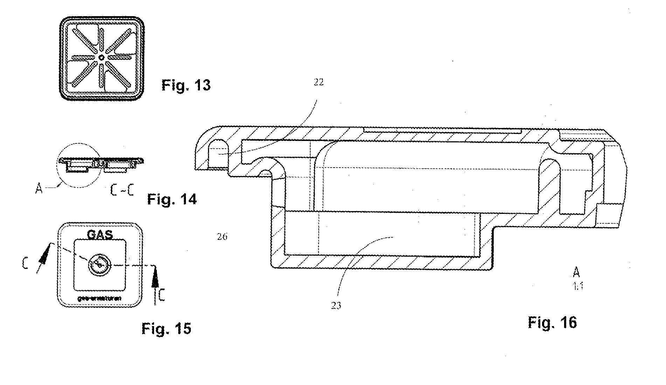

Die **Figuren 13 bis 16** zeigen, wie in der abnehmbaren Abdeckung 20 außerdem eine Möglichkeit zum Auffangen von Kondensat geschaffen wird. Dabei zeigt die **Figur 13** eine ähnliche Darstellung wie die Figur 9, die Figur 14 eine Darstellung ähnlich der Figur 10 und die Figur 15 eine Darstellung ähnlich der Figur 12, wobei in der **Figur 15** angedeutet ist, wie ein Schnitt C-C gelegt ist, der in der Figur 14 dargestellt ist. In der **Figur 14** ist dabei eine Einzelheit A angedeutet, die in der **Figur 16** in deutlich vergrößertem Maßstab wiedergegeben ist.

Die Figur 16 zeigt mithin einen Teil des Deckelelements 20, in dem vergrößert die umlaufende Dichtung 22 zu erkennen ist, ferner der Auffang 23 und eine Öffnung 26 zum Innenraum.

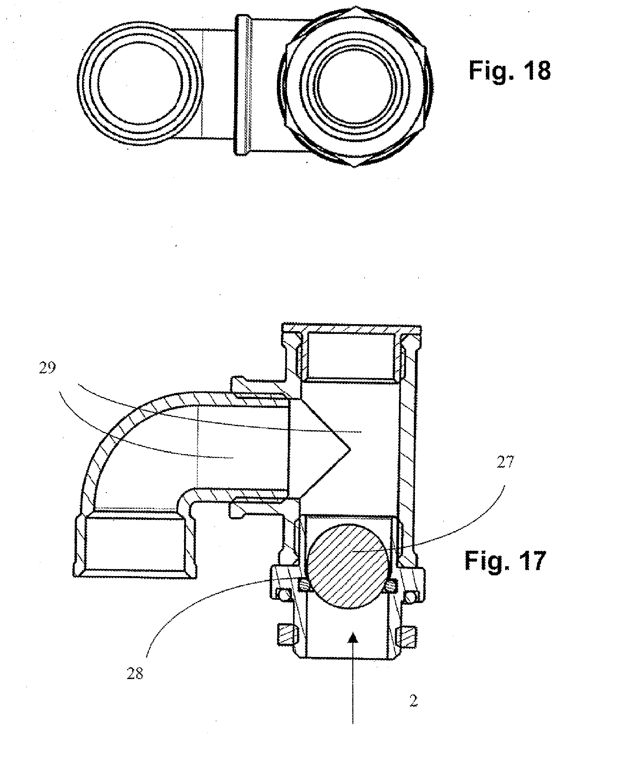

Die **Figuren 17 bis 20** zeigen Details des Überdruckelements 21, das hier als Kugelventil ausgestaltet ist. Dabei ist in der **Figur 17** das Überdruckelement 21 in Form eines Kugelventils in der geschlossenen Stellung, also im Ruhezustand. Man sieht dabei, dass das Überdruckelement 21 nach unten zum Innenraum des Schachtkörpers 2 hin geöffnet ist. Die Fließrichtung des im Innenraum des Schachtkörpers 2 befindlichen Gases ist hier also nach oben gerichtet. Der Kanal des Überdruckelements 21 ist hier durch eine Kugel 27 verschlossen, die in einer Dichtung 28 sitzt und in diesem Ruhezustand natürlich zusammen mit der Dichtung 28 den Strömungsweg schließt.

Darüber befindet sich ein U-förmiger Raum 29, der mit atmosphärischer Luft gefüllt ist, da er mit dem Außenraum in Verbindung steht. Diese Verbindung erfolgt durch das U, das in der Figur 17 nach links führt.

In der **Figur 18** kann man eine Ansicht dieser Konzeption von unten sehen.

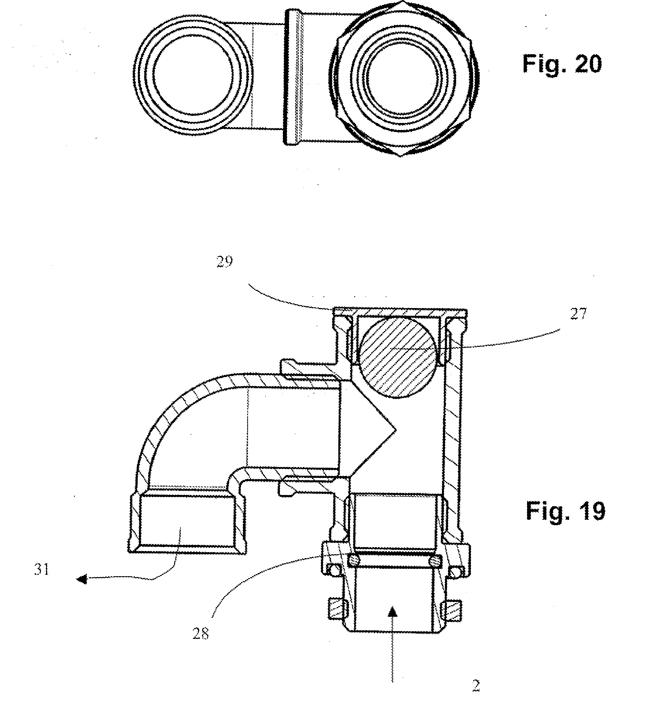

Die **Figur 19** zeigt nun das gleiche Überdruckelement 21 in seinem geöffneten Zustand. Wieder sieht man, wie vom Innenraum des Schachtkörpers 2 aus die Strömungs- oder Fließrichtung des hier nun unter Überdruck stehenden Gases nach oben in diese Öffnung des Überdruckelements 21 gerichtet ist. Die Kugel 27 ist hier durch den Überdruck im Innenraum des Schachtkörpers 2 aus der Dichtung 28 nach oben bis zu einem Anschlag 29 gedrückt worden. Dadurch ist der Strömungsweg für das Gas durch die Dichtung 28 mit ihrer hier nun freigegebenen mittleren Öffnung möglich. Das Gas strömt dann durch den U-förmigen Raum 29 und aus dem Gasaustritt 31 in den Außenraum.

**Figur 20** zeigt wiederum eine Ansicht von unten ähnlich wie Figur 18.

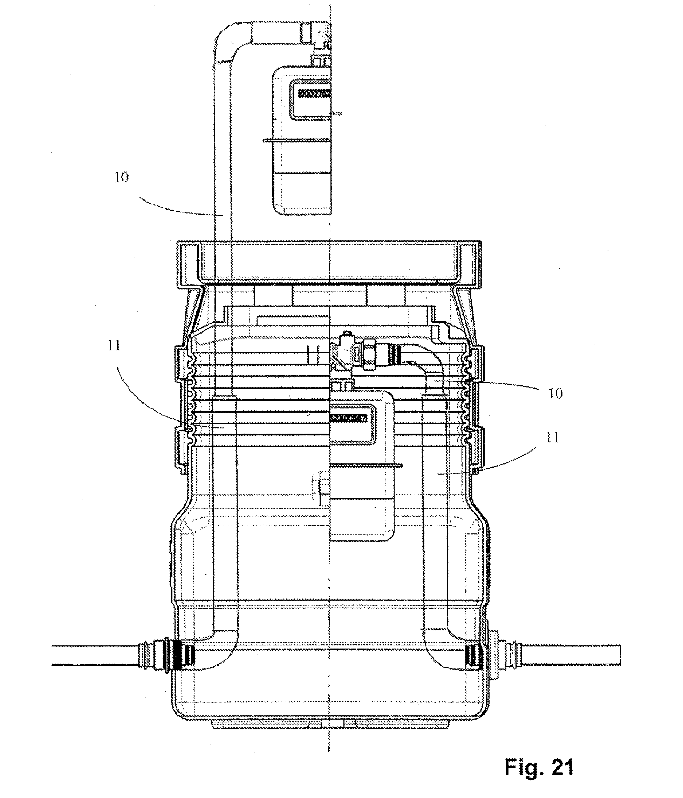

Die **Figur 21** zeigt in zwei Teilbildern einen jeweiligen Schnitt durch eine Ausführungsform in zwei Positionen. Auf der rechten Seite sieht man, wie diese Ausführungsform im üblichen Betriebszustand aussieht. Der Deckelbereich 4 schließt den Schachtkörper 2 nach oben ab, wobei sich eine Armatur 30 im inneren Raum des Schachtkörpers 2 befindet. Ferner sind verschiedene Leitungen 10, 11 vorgesehen.

Auf der linken Seite sieht man dagegen den Moment, in dem die Armatur 30 abgelesen werden soll. In diesem Fall wird mittels der Leitungen 10, 11 und einer Handhabe die Armatur 30 nach oben herausgezogen, nachdem der Deckelbereich 4 (nicht dargestellt) hier abgenommen worden ist.

Hier wird anstelle einer scherenförmigen Anordnung der Leitungen 10, 11 eine teleskopierbare Anordnung der Leitungen 10, 11 geschaffen. Durch das Herausziehen der teleskopierbaren Leitungen parallel zu ihrer eigenen Längsachse kann die Armatur 30 auch hier über den Erdboden hinaus angehoben werden.

### Bezugszeichenliste

- 1: Leitungsanordnung
- 2: Schachtkörper
- 3: Bodenbereich des Schachtkörpers
- 4: Deckelbereich des Schachtkörpers
- 5: Zähler für das Fluid
- 6: Absperreinrichtung
- 7: Versorgungsleitung im Erdboden
- 8: erster Anschluss
- 9: erster Anschluss
- 10: Leitung im Innenraum des Schachtkörpers

- 11: Leitung im Innenraum des Schachtkörpers
- 12: zweiter Anschluss
- 13: zweiter Anschluss
- 14: steifer Leitungsabschnitt
- 15: steifer Leitungsabschnitt
- 16: steifer Leitungsabschnitt
- 17: steifer Leitungsabschnitt
- 18: steifer Leitungsabschnitt
- 19: steifer Leitungsabschnitt

- 20: abnehmbare Abdeckung
- 21: Überdruckelement
- 22: umlaufende Dichtung
- 23: Auffang
- 24: Verriegelungsmechanik
- 25: Griff
- 26: Öffnung zum Innenraum
- 27: Kugel
- 28: Dichtung
- 29: U-förmiger Raum
- 30: Armatur
- 31: Gasaustritt

## Patentansprüche

1. Schachteinrichtung
mit einem Schachtkörper (2), der von einem Bodenbereich (3) bis zu einem Deckelbereich (4) aufragt, einen Innenraum umgibt und zur Anordnung im Erdreich geeignet ist,
mit einer abnehmbaren Abdeckung (20) des Schachtkörpers (2),
mit zwei seitlichen ersten Anschlüssen (8, 9) für im Erdreich verlegte Versorgungsleitungen (7) für Fluide, insbesondere Gase,
mit einer Leitungsanordnung (1) für Fluide, insbesondere Gase, mit einer Armatur (30) und Leitungen (10, 11),
wobei die Armatur (30) einen Zähler (5) für das Fluid und/oder Absperreinrichtungen (6) enthält,
wobei die Leitungen (10, 11) die Armatur (30) mit den beiden seitlichen ersten Anschlüssen (8, 9) für die Versorgungsleitungen (7) verbinden und über zwei zweite Anschlüsse (12, 13) an die Armatur (30) angeschlossen sind,
**dadurch gekennzeichnet,**
**dass** ein Überdruckventil (21) vorgesehen ist, das bei einem Überdruck im Innenraum des Schachtkörpers (2) anspricht und den Innenraum nach außen öffnet.

2. Schachteinrichtung nach Anspruch 1,
**dadurch gekennzeichnet,**
**dass** das Überdruckventil (21) in der abnehmbaren Abdeckung (20) des Schachtkörpers (2) vorgesehen ist.

3. Schachteinrichtung nach Anspruch 1 oder 2,
**dadurch gekennzeichnet,**
**dass** das Überdruckventil (21) bereits bei Drücken von weniger als 100 hPa (100 mbar) öffnet.

4. Schachteinrichtung nach einem der vorstehenden Ansprüche,
**dadurch gekennzeichnet,**
**dass** das Überdruckventil (21) im Falle einer Öffnung von einem großen Volumenstrom aus dem Innenraum des Schachtkörpers (2) passiert werden kann.

5. Schachteinrichtung nach einem der vorstehenden Ansprüche,
**dadurch gekennzeichnet,**
**dass** das Überdruckventil (21) gegen ein Eindringen von Schmutz und/oder Wasser aus dem Außenraum geschützt ist.

6. Schachteinrichtung nach einem der vorstehenden Ansprüche,
**dadurch gekennzeichnet,**
**dass** das Überdruckventil (21) ein Kugelventil ist, welches nach dem Schwerkraftprinzip arbeitet.

7. Schachteinrichtung nach einem der vorstehenden Ansprüche,
**dadurch gekennzeichnet,**
**dass** das Überdruckventil (21) u-förmig ausgestaltet ist.

8. Schachteinrichtung nach einem der vorstehenden Ansprüche,
**dadurch gekennzeichnet,**
**dass** im Innenraum des Schachtkörpers (2) eine Einlegemöglichkeit für Trockenmittel vorgesehen ist.

9. Schachteinrichtung nach einem der vorstehenden Ansprüche,
**dadurch gekennzeichnet,**
**dass** eine Einbringmöglichkeit für trockenes Gas, insbesondere Luft, in den Innenraum im Schachtkörper (2) vorgesehen ist.

10. Schachteinrichtung nach einem der vorstehenden Ansprüche,
**dadurch gekennzeichnet,**
**dass** eine Absaugmöglichkeit für ein Absaugen des Fluides, insbesondere des Gases, aus dem Innenraum im Schachtkörper (2) vorgesehen ist.

11. Schachteinrichtung nach einem der vorstehenden Ansprüche,
**dadurch gekennzeichnet,**
**dass** eine Kondensationsmöglichkeit für die Luftfeuchtigkeit im Innenraum des Schachtkörpers (2) vorgesehen ist.

12. Schachteinrichtung nach Anspruch 11,
**dadurch gekennzeichnet,**
**dass** die abnehmbare Abdeckung (20) als Hohlkörper ausgebildet ist, und dass die abnehmbare Abdeckung (20) zum Innenraum im Schachtkörper (2) hin mit Öffnungen versehen ist,
und in dem Hohlkörper der abnehmbaren Abdeckung (20) eine Auffangmöglichkeit (23) im Deckelboden (21) vorgesehen ist.

13. Schachteinrichtung nach Anspruch 11 oder 12,
**dadurch gekennzeichnet,**
**dass** die Wandung der abnehmbaren Abdeckung (20) in dem Bereich des höchsten Punktes der Deckelaußenseite mit einer höheren Wärmeleitfähigkeit verglichen mit den anderen Bereichen der abnehmbaren Abdeckung (20) und des Schachtkörpers (2) ausgebildet ist.

14. Schachteinrichtung nach Anspruch 13,
**dadurch gekennzeichnet,**
**dass** der Bereich der höheren Wärmeleitfähigkeit der Deckelwandung der abnehmbaren Abdeckung (20) des Schachtkörpers (2) durch eine verminderte Wandstärke erreicht wird.

15. Schachteinrichtung nach einem der vorstehenden Ansprüche,
**dadurch gekennzeichnet,**
**dass** die Armatur (30) zwischen dem Bodenbereich (3) und dem Deckelbereich (4) auf und ab bewegbar ist,
**dass** die Leitungen (10, 11) aus miteinander verbundenen steifen Leitungsabschnitten bestehen, und
**dass** die steifen Leitungsabschnitte (14-19) über mehrere verdrehbare Kupplungen miteinander gekoppelt sind.

16. Schachteinrichtung nach Anspruch 15,
**dadurch gekennzeichnet,**
**dass** die verdrehbaren Kupplungen so aufgebaut sind, dass bei einer Bewegung der Armatur (30) aufwärts und abwärts sich die Leitungsanordnung (1) mit den Leitungsabschnitten (14-19) und der Armatur (30) so entfaltet, dass die Armatur (30) und die Leitungsabschnitte (14-19) vertikal oder in Schräglage verlaufen.

17. Schachteinrichtung nach Anspruch 16,
**dadurch gekennzeichnet,**
**dass** die Kupplungen und die Leitungsabschnitte (14-19) so aufgebaut sind, dass bei voll entfalteter Leitungsanordnung (1) die Armatur (30) an ihrem obersten erreichbaren Punkt horizontal angeordnet ist.

18. Schachteinrichtung nach einem der vorstehenden Ansprüche,
**dadurch gekennzeichnet,**
**dass** der Armatur (30) eine Handhabe zugeordnet ist, und dass beim Anheben der Armatur (30) diese zusammen mit den Leitungsabschnitten (14-19) um die verdrehbaren Kupplungen entfaltet wird.

19. Schachteinrichtung nach einem der Ansprüche 1 bis 14,
**dadurch gekennzeichnet,**
**dass** die Leitungsanordnung (1) Leitungen (10, 11) aufweist, die teleskopierbar ineinander gesteckt und zueinander abgedichtet sind.
